# NEUE EUROPÄISCHE PATENTSCHRIFT

(11) **EP 0 202 483 B2**
(45) Veröffentlichungstag und Bekanntmachung des Hinweises auf die Entscheidung über den Einspruch: **09.02.1994**
(45) Hinweis auf die Patenterteilung: 08.08.1990
(21) Anmeldenummer: 86105487.2
(22) Anmeldetag: 21.04.1986
(51) Int. Cl.: B61D 17/20, B60D 5/00

(54) **Bauelement für Übergangsschutzeinrichtungen für gelenkig miteinander zu kuppelnde Fahrzeuge, insbesondere Schienenfahrzeuge**
Assembly for a communication passage device for articulated vehicles, especially railway vehicles
Elément de construction pour dispositif de communication pour véhicules articulés, notamment véhicules ferroviaires

(30) Priorität: 24.04.1985 DE 3514760
(43) Veröffentlichungstag der Anmeldung: 26.11.1986
(73) Patentinhaber: HÜBNER Gummi- und Kunststoff GmbH, D-34123 Kassel (DE)
(72) Erfinder: Schmidt, Helmbrecht, D-3502 Vellmar (DE); Koch, Robert, D-3437 Bad Sooden-Allendorf (DE)
(74) Vertreter: Walter, Helmut, Dipl.-Ing.

(56) Entgegenhaltungen:
- BE-A- 523 358
- CH-A- 668 397
- DE-A- 3 032 759
- DE-C- 640 970
- US-A- 447 054
- US-A- 497 145
- US-A- 2 124 264
- US-A- 2 309 073
- US-A- 2 383 372
- US-A- 2 642 816
- US-A- 3 399 632
- US-A- 3 410 226
- US-A- 3 486 464
- US-A- 3 996 859

## Beschreibung

Bei der Personenbeförderung dienenden Gelenkzügen ist es üblich, zwischen je zwei gelenkig miteinander verbundenen Wagen Übergangseinrichtungen vorzusehen, um den Personen ein Überwechseln vom einen zum anderen Wagen zu ermöglichen. Eine Übergangseinrichtung besteht im Regelfall aus einer begehbaren Brücke und einem rohr- oder tunnelförmigen Übergangsschutz, der ein von Fahrt- und Wetterunbilden unbeeinflußtes Überwechseln ermöglicht.

Als Übergangsschutz finden Faltenbälge oder Wülste Anwendung. Der Faltenbalg ist bei Gelenkomnibussen die heute allgemein anzutreffende Lösung, bei Schienenfahrzeugen die heute relativ selten anzutreffende Lösung. Die heute bei Schienenfahrzeugen allgemein anzutreffende Lösung ist der Wulst.

Bei der Wulstlösung findet ein oberes horizontales Wulstrohr Anwendung, an dessen Unterseite nahe den Enden zwei vertikale, seitliche Wulstrohre angesetzt sind, die mit ihren unteren Enden im Bereich der Oberkante des Fußbodens der Fahrzeuge enden. Jedes Wulstrohr ist ein offenes Rohr mit etwa kreisförmigem Querschnitt aus in sich elastisch nachgiebigem Material. Bei miteinander gekuppelten Wagen liegen die einander entsprechenden Wulstrohre beider Wagen im Bereich ihrer Scheitellinien unter Vorspannung aneinander, und, da sie an ihrem zugehörigen Wagen auch dicht befestigt sind, liegt ein wasser-, wind- und staubdichter Übergang vor. Durchfährt ein Zug eine Kurve, so wird in den kurvenäußeren vertikalen Wulstrohren die Radialspannung verringert, während sie in den kurveninneren vertikalen Wulstrohren unter Abplattung der Wulstrohre zunimmt und im oberen Wulstrohr im Teil des kurvenäußeren Endes ab- im anderen Teil zunimmt. Relativbewegungen der Wülste beider Wagen zueinander treten im wesentlichen als Abrollbewegungen beider Wülste aufeinander auf. Im unteren Teil der senkrechten Wulstrohre sind federnde Bleche angebracht, die eine zu große seitliche Querverschiebung der Wülste zum Durchgang hin verhindern.

Den Anforderungen moderner Hochleistungszüge werden die Wulstübergänge nur unzulänglich gereicht. Die kleine Fläche, in denen sich die Wülste eines Wulstpaares zweier Wagen einander berühren, sind zu klein, um auch dann eine zuverlässige Abdichtung zu ergeben, wenn sich beispielsweise zwei Hochgeschwindigkeitszüge, gegebenenfalls sogar noch in einem Tunnel, begegnen. Die Dichtung ist insbesondere dann unzulänglich, wenn beim Durchfahren enger Kurven die kurvenaußenseitigen, vertikalen Wulste voneinander abheben. Dies ist aber deswegen nicht zu vermeiden, weil als Wulstmaterial nicht beliebig elastisches Material verwendet werden kann und die Vorspannung nicht beliebig hoch eingestellt werden kann. Ein weiterer Nachteil ist der relativ kleine Querschnitt der Wulstrohre, wodurch die Zugaußenkontur zwischen je zwei Wagenenden deutlich nach innen zurückweicht, da die Wülste dicht an die Übergangsbrücke herangerückt sein müssen. Dies bedeutet, daß eine wirklich windschlüpfrige Zugkontur nicht möglich ist und die Luftwirbel in den Bereichen der Wagenübergänge nicht nur Energieverluste zur Folge haben, sondern auch die Ursache für erhebliche Verschmutzung sind.

Im einzelnen bekannt ist eine Anordnung, bei der der Stirnseite eines Eisenbahnwagens Kollisionspfosten fest zugeordnet sind, auf deren vorderen Enden Gummipuffer aufgesetzt sind (US-A-3 996 859). Die vorderen Enden der Gummipuffer sind mit Reibplatten versehen. Sind zwei solche Eisenbahnwagen miteinander gekuppelt, so liegen die Reibplatten aufeinander, und die Reibplatten beider Wagen können sich so verschieben, wie es die Wagenbewegungen vertikal, quer und entsprechend Schwenkbewegungen erforderlich machen. Die Gummipuffer sind zwischen den Kollisionspfosten und den Reibplatten frei. Werden die Gummipuffer komprimiert, so besteht die Gefahr, daß sich Fremkörper zwischen den Wellen der Gummipuffer festsetzen und die Gummipuffer bald zerstört werden.

Bei einer anderen, ebenfalls bekannten Anordnung, die dem ersten Teil des Anspruchs 1 entspricht, handelt es sich um eine sehr vielteilige und aufwendige Vorrichtung (DE-C-640 970). Zunächst sind Puffer vorgesehen, dann ist ein Faltenbalg vorgesehen und dann ist schließlich noch eine Windverkleidung vorgesehen, die an ihren vorderen Enden mit dichtenden Köpfen versehen ist.

Aufgabe der Erfindung ist es, ein Bauelement für den Übergangsschutz so auszugestalten, daß eine erfindungsgemäße, Bauelemente verwendende Übergangsschutzeinrichtung eine optimale Isolierung möglich macht, ohne daß dieser aber deshalb die Relativbewegungen zwischen zwei Wagen eines Zuges unannehmbar behindert.

Zur Lösung dieser Aufgabe wird vor allem ein Bauelement für eine Übergangsschutzeinrichtung vogeschlagen, die gekennzeichnet ist durch eine Stirnplatte mit einer Außenschicht aus abriebfestem Material, an der Rückseite der Stirnplatte abgestützte Federelemente deren der Stirnplatte abgewandten Enden zur Abstützung an der äußeren Stirnwandfläche eines Gelenkfahrzeuges bestimmt sind und eine in Wirkrichtung der Federelemente nachgiebige Bespannung die einerseits an der Stirnplatte befestigt ist und andererseits zur Befestigung an der zur Abstützung der Federn bestimmten Stirnwandfläche ausgebildet ist und einen an die Stirnplatte in Richtung auf die Stirnwandfläche sich anschließenden, die Federn aufnehmenden, Raum zumindest teilweise umschließt.

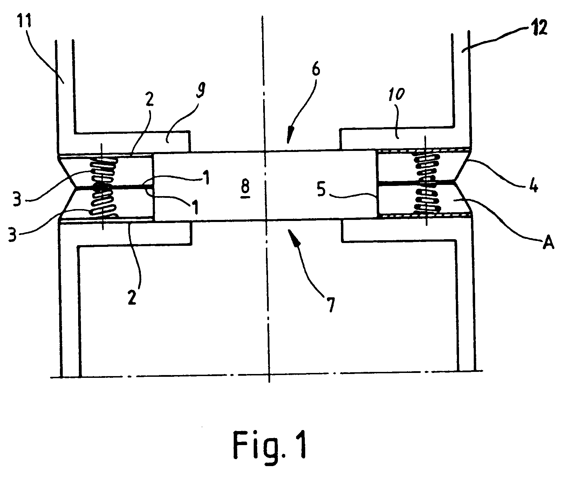

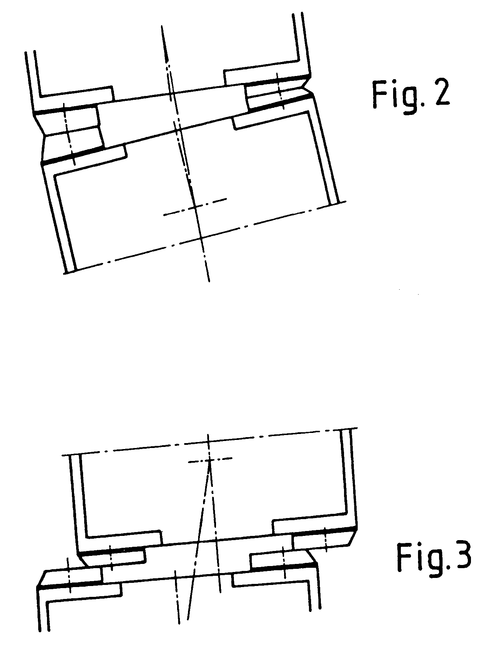

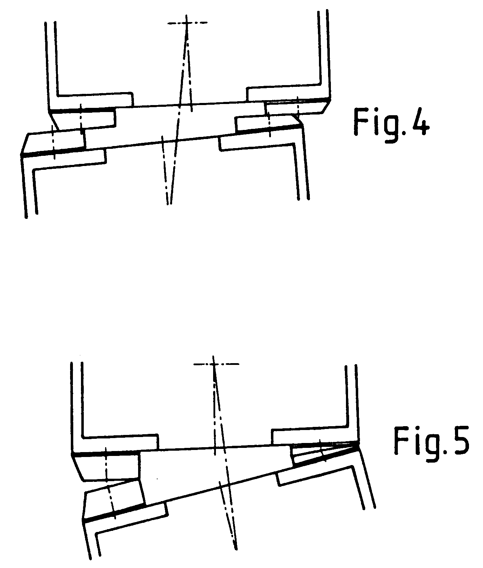

Die Erfindung ist nachfolgend anhand des in der Zeichnung dargestellten Ausführungsbeispieles beschrieben. Jede der Figuren 1 bis 5 ist ein schematischer Horizontalschnitt durch den Übergangsbereich zwischen zwei gelenkig miteinander gekuppelten Wagen, wobei sich die Wagen in der Darstellung der Fig. 1 in der Geradeausfahrt befinden und die vertikalen Wulstrohre im Schnitt dargestellt sind, während in Fig. 2 bis 5 unterschiedliche Stellungen der Wagen zueinander vorausgesetzt sind. Die Ubergangsschutzeinrichtung verwendet erfindungsgemäße Bauteile, die erfindungsgemäß eingebaut sind.

Jedes erfindungsgemäße Bauelement, das an die Stelle eines Wulstrohres bei bekannten Übergangsschutzeinrichtungen mit Wulstrohren tritt, besteht aus einer vorderen Reibfläche 1, die aus einem Spezialgleitwerkstoff besteht und die Form einer ebenen Platte hat, auf einer solchen Stirnplatte aufgetragen ist oder lösbar und leicht auswechselbar einer solchen Platte zugeordnet ist und aus einer hinteren Tragplatte 2 sowie einer Anzahl auf die Länge des Bauelementes verteilten Federn 3, die als vorzugsweise Ausführungsform Trapezfedern sind. An ihren Seiten ist zwischen den Enden von Reibfläche 1 bzw. der Stirnplatte und Tragplatte 2 eine Bespannung 4, 5 vorgesehen, die die Federcharakteristik der Trapezfedern 3 allenfalls in geringem Maße beeinflussen soll, den Relativbewegungen der Stirnplatte gegenüber der Tragplatte entsprechend den Verstellungen der Federn 3 jedoch zu folgen vermag. Die Bespannung ist zwischen den Längskanten der Reibfläche 1 und der Tragplatte 2 angeordnet und kann auch zwischen deren kurzen Kanten vorgesehen sein. Die Teile des Bauelementes umschließen einen die Federn 3 aufnehmenden Raum A.

Die Stirnwandöffnungen in den beiden im Horizontalschnitt dargestellten Stirnseiten zweier gelenkig miteinander gekuppelten Fahrzeuge sind mit 6 und 7 bezeichnet, die sehr schematisch dargestellte Übergangsbrücke ist mit 8 bezeichnet. Die beiden seitlichen Bauelemente 9, 10 und das obere, horizontale Bauelement ("Wulstrohre" beim Stand der Technik) haben den gleichen beschriebenen Aufbau und ihre Länge entspricht im wesentlichen denen der Wulstrohre bei konventionellen Lösungen. Die Breite jedes senkrechteen Bauelementes 9, 10 reicht von nahezu der einen Kante der Stirnwandöffnungen bis nahezu zur Seitenwand 11 bzw. 12 des jeweiligen Wagens. Da die Reibfläche außen kürzer ist als die Tragplatte 2 ergibt sich ein keilförmiger Verlauf der äußeren Bespannung 4, so daß diese Bespannungen zweier zusammenwirkender Bauelemente auch bei der Kurvenfahrt nicht zum Aufliegen aufeinander kommen.

In Fig. 1 sind zwei erfindungsgemäße Bauelemente (zwei seitliche, vertikale Bauelemente), soweit zum Verständnis der Erfindung notwendig, im einzelnen im Querschnitt, und zwar bei normaler Geradeausfahrt des Gelenkfahrzeuges, in Fig. 2 bis 5 sind verschiedene mögliche Stellungen der Wagen zueinander dargestellt, um zu zeigen, daß bei den verschiedenen Wagenstellungen die Übergangsschutzteile gemäß der Erfindung beider Wagen zumindest den Berührungskontakt miteinander haben, der für den Erhalt einer zuverlässigen Dichtungswirkung notwendig ist.

Die Befestigung der Tragplatten an den Wagenstirnseiten kann in beliebiger Weise erfolgen, ebenso wie die Befestigung der Federn 3 an den Tragplatten und den Reibflächen und die Befestigung der Bespannung. Die Anwendung der Tragplatten 2 gibt die Möglichkeit von Baueinheiten, die wie Wülste selbstständig bis zum Anbau gehandhabt werden können.

Bei der Stirnplatte handelt es sich um eine beliebige Platte, die mit einem abriebfesten, die Gleitreibung mindernden und gegebenenfalls selbst schmierenden Material, beispielsweise um ein gitterförmiges Gewebe, dessen Gitterzwischenräume mit Graphit gefüllt sind, beschichtet ist. Die Stirnplatte kann auch insgesamt eine derartige Materialstruktur sein. Oder eine derartige Platte kann, wie die Bremsbeläge von Trommel- oder Scheibenbremsen, lösbar einer Platte aus beliebigem Material zugeordnet sein. Gegebenenfalls können auch die Seitenteile der Bespannung vor den Federn 3 zusammengeführt und dort einstückig, beispielsweise miteinander, verbunden sein und die so gebildete Stirnfläche mit einer entsprechenden Gleitschicht beschichtet sein, um so eine integrierte Stirnplatte zu bilden.

Wichtig ist noch eine Lösung, die allerdings nicht auf die Anwendung erfindungsgemäßer Bauelemente beschränkt ist, die eine ringsum geschlossene Röhre bildet. Diese Lösung war bisher nur bei Faltenbälgen möglich, die im Zusammenhang mit dem Kuppel- bzw. Entkuppelvorgang zweier Gelenkfahrzeuge geöffnet wurden. Bei Wülsten scheiterte der geschlossene Tunnel stets daran, daß der sogenannte "Berner Raum" beeinträchtigt wurde, eine Schutzraum für den Bedienungsmann, damit dieser ungefährdet zwischen seitlichen Pufferzonen der Wagen stehen konnte. Wird nun erfindungsgemäß der untere, horizontale Wulst oder vorzugsweise das untere, horizontale Bauelement in Längsrichtung des Gelenkfahrzeuges verschiebbar angeordnet, beispielsweise durch Befestigung an den vorderen Enden von am Wagen gelagerten Kolben-Zylindereinheiten, so kann für den Betrieb eine ringsum geschlossene Röhre gebildet werden, wobei der untere, horizontale Teil zum Wagen hin zurückgefahren wird, um für die Bedienungsperson den "Berner Raum" freizugeben.

Bei Anwendung dieser Lösung in Verbindung mit erfindungsgemäßen Bauelementen können diese unteren, horizontalen Bauelemente in vertikaler Richtung trittfest und begehbar ausgebildet werden, so daß sie bei geeigneter Anordnung unmittelbar als Übergangsbrücke dienen können.

## Patentansprüche

1. Einrichtung zum Schutz des Überganges zwischen zwei Schienenfahrzeugen (6,7), die so miteinander gekuppelt sind, daß sie sich um eine horizontale Längsachse gegeneinander verschwenken können, daß sie horizontal und vertikal gegeneinander verschoben werden können und daß sich der Abstand zwischen ihnen verändern kann, wobei die Einrichtung um eine Übergangsbrücke (8) herumgeführt ist und sich im Bereich zwischen dieser Übergangsbrücke und der Außenumgrenzung beider Fahrzeuge befindet, sowie aus zwei Teilen besteht, die mit hinteren Endplatten an jeweils einem der Fahrzeuge befestigt sind und mit vorderen Endplatten unter dem Einfluß von zwischen beiden Endplatten angeordneten Federn aufeinanderliegen, **dadurch gekennzeichnet,** daß jede hintere Endplatte in ihren vertikalen Abschnitten mit ihrer Außenkante an der Außenkante der einen Fahrzeugseitenwand anliegt, daß jede vordere Endplatte in ihren vertikalen Abschnitten mit ihrer Außenkante hinter der Außenkante der einen Fahrzeugseitenwand liegt, daß die Platten (1,2) eines Plattenpaares mit den der Übergangsbrücke (8) zugekehrten Kanten nahezu an die eine Kante einer Stirnwandöffnung zur Übergangsbrücke reichen, daß jede vordere Endplatte mit einer äußeren, abriebfesten die Gleitreibung mindernden Dichtwirkung vermittelnden Reibfläche belegt ist und daß die Außenkanten der Platten des Plattenpaares jedes Fahrzeugs durch eine nachgiebige, aber nicht federnde Bespannung (4) miteinander verbunden sind.

2. Einrichtung nach Anspruch 1, dadurch gekennzeichnet, daß die Federelemente (3) Trapezfedern sind.

3. Einrichtung nach Anspruch 1 oder 2, dadurch gekennzeichnet, daß die Außenschicht der Stirnwandplatte als selbständige Platte aus abriebfestem Material leicht lösbar zugeordnet ist.

4. Einrichtung nach einem der Ansprüche 1 bis 3, für den Einbau unterhalb des unteren Randes einer Durchgangsöffnung in der Stirnwand eines von zwei gelenkig miteinander gekuppelten Fahrzeuges, dadurch gekennzeichnet, daß es in vertikaler Einbaurichtung trittsteif und trittfest ist.

5. Einbau einer Einrichtung nach einem der Ansprüche 1 bis 4 und vorzugsweise nach Anspruch 4 unter dem unteren Rand einer Durchgangsöffnung in der Stirnwand eines Fahrzeuges, dadurch gekennzeichnet, daß das Bauelement in seiner Gesamtheit oder im Bereich zwischen seitlichen Fahrzeugpufferelementen in der Längsrichtung des Fahrzeuges zwangsweise verstellbar gelagert ist.

6. Einbau nach Anspruch 5, dadurch gekennzeichnet, daß das Bauelement an der einen von zwei relativ zueinander verstellbaren Einheiten einer Kolbenzylindereinheit gelagert ist, deren andere Einheit am Fahrzeug gehalten ist.

7. Einbau nach Anspruch 6, gekennzeichnet durch mehrere auf die Länge der Einrichtung verteilte Kolbenzylindereinheiten.

8. Einbau nach einem der Ansprüche 5 bis 7, gekennzeichnet durch einen Verstellweg, der sich aus der Hälfte der Länge des sogenannten "Berner Raumes" in Fahrzeuglängsrichtung ergibt.

## Claims

1. A device for protecting the passage between two rail vehicles (6, 7) so coupled together as to be pivotable relatively to one another around a horizontal longitudinal axis and to be displaceable vertically and horizontally relatively to one another and so that the distance between them can vary, the device extending around a gangway floor plate (8), being disposed in the zone between the same and the outer contour of the two vehicles and being in two parts each secured by way of rear end plates to one of the vehicles and resting on one another by front end plates under the influence of springs disposed between the two end plates,
characterised in that each rear end plate bears, in its vertical portions, by its outside edge against the outside edge of one vehicle side wall, in that each front end plate lies, in its vertical portions, with its outside edge behind the outside edge of one vehicle side wall, in that the plates (1, 2) of a pair extend, by the edges facing the floor plate (8), almost to one edge of an end wall opening to the footplate, in that each front end plate is covered by an outer abrasionresistant friction-surface providing a sealing action which reduces sliding friction, and in that the outside edges of the plates of the plate pair of each vehicle are interconnected by a yielding but not springy covering (4).

2. A device according to claim 1 characterised in that the spring elements (3) are trapezoidal springs.

3. A device according to claim 1 or 2, characterised in that the outer layer is associated in readily releasable manner, as an independent abrasion-resistant plate, with the end well plate.

4. A device according to any of claims 1 - 3 for fitting below the bottom edge of a vestibule opening in the end well of one of two vehicles articulated to one another, characterised in that it is tread-resistant in the vertical fitting direction.

5. The fitting of a device according to any of claims 1 - 4 and preferably according to claim 4 under the bottom edge of a vestibule opening in a vehicle end wall, characterised in that the component is mounted in its entirety or in the zone between lateral vehicle buffer elements for automatic adjustment lengthwise of the vehicle.

6. A fitting according to claim 5, characterised in that the component is mounted on one of two units of a reciprocating actuating unit, the two units being adjustable relatively to one another, the other unit being disposed on the vehicle.

7. A fitting according to claim 6, characterised in by a number of reciprocating actuator units distributed over the length of the device.

8. A fitting according to any of claims 5 - 7, characterised by an adjustment distance resulting from half the length of the Berne rectangle lengthwise of the vehicle.

## Revendications

1. Dispositif pour la protection du passage d'intercommunication entre deux véhicules sur rails (6,7) qui sont couplés entre-eux de manière à pouvoir pivoter l'un par rapport à l'autre le long d'un axe longitudinal horizontal, de manière à ce qu'ils puissent coulisser horizontalement et verticalement l'un par rapport à l'autre, et que leur écartement mutuel puisse varier, le dispositif étant conduit autour d'une passerelle (8) et prenant place dans la zone comprise entre cette passerelle et le contour extérieur des deux véhicules, le dispositif étant par ailleurs composé de deux parties qui sont chacune fixées sur un des véhicules par l'intermédiaire de plaques d'extrémité arrière, et qui sont appliquées l'une sur l'autre par l'intermédiaire de plaques d'extrémité avant, sous l'influence de ressorts disposés entre les deux plaques d'extrémité, caractérisé en ce que chaque plaque d'extrémité arrière, sur ses tronçons verticaux, vient s'appliquer avec son bord extérieur, sur le bord extérieur de la paroi latérale correspondante du véhicule, en ce que chaque plaque d'extrémité avant, sur ses tronçons verticaux, est située, avec son bord extérieur, en retrait du bord extérieur de la paroi latérale correspondante du véhicule, en ce que les plaques (1, 2) d'une paire de plaques, avec leurs bords dirigés vers la passerelle (8), s'étendent jusqu'à proximité immédiate du bord correspondant d'une ouverture de paroi frontale vers la passerelle, en ce que chaque plaque d'extrémité avant est revêtue d'une surface de friction extérieure, résistant à l'abrasion, réduisant le frottement de glissement et produisant un effet d'étanchéité, et en ce que les bords extérieurs des plaques d'une paire de plaques de chaque véhicule sont reliés au moyen d'une garniture de capotage (4) souple, mais non élastique.

2. Dispositif selon la revendication 1, caractérisé en ce que les éléments-ressort (3) sont constitués par des ressorts de section trapézoïdale.

3. Dispositif selon la revendication 1 ou 2, caractérisé en ce que la couche de revêtement est associée à la plaque frontale, de manière facilement démontable, sous la forme d'une plaque indépendante en un matériau anti-usure.

4. Dispositif selon l'une des revendications 1 à 3, destiné au montage en-dessous du bord inférieur d'une ouverture de passage réalisée dans la paroi frontale d'un de deux véhicules couplés de manière articulée, caractérisé en ce qu'il présente dans la direction verticale une rigidité et une résistance autorisant la marche.

5. Montage d'un dispositif selon l'une des revendications 1 à 4, et notamment la revendication 4, en-dessous du bord inférieur d'une ouverture de passage réalisée dans la paroi frontale d'un véhicule, caractérisé en ce que l'élément de construction, dans son ensemble ou dans une zone située entre des tampons latéraux d'amortissement du véhicule, est monté de manière à pouvoir être déplacé par contrainte, suivant la direction longitudinale du véhicule.

6. Montage selon la revendication 5, caractérisé en ce que l'élément de construction est agencé sur l'un des deux éléments mobiles l'un par rapport à l'autre, d'un vérin, dont l'autre élément est maintenu sur le véhicule.

7. Montage selon la revendication 6, caractérisé par la présence de plusieurs vérins répartis sur la longueur du dispositif.

8. Montage selon l'une des revendications 5 à 7, caractérisé en ce que la course de déplacement est donnée par la moitié de la longueur, dans le sens longitudinal du véhicule, de l'espace dénommé "espace de Berne".
